**Europäisches Patentamt**

**European Patent Office**

**Office européen des brevets**

(11) Veröffentlichungsnummer: **0 265 555 B1**

(12) **EUROPÄISCHE PATENTSCHRIFT**

(45) Veröffentlichungstag der Patentschrift: **18.09.91**

(51) Int. Cl.⁵: **G06F 7/50**

(21) Anmeldenummer: **86115152.0**

(22) Anmeldetag: **31.10.86**

(54) Verfahren und Schaltungsanordnung zur Addition von Gleitkommazahlen.

(43) Veröffentlichungstag der Anmeldung:
**04.05.88 Patentblatt 88/18**

(45) Bekanntmachung des Hinweises auf die
Patenterteilung:
**18.09.91 Patentblatt 91/38**

(84) Benannte Vertragsstaaten:
**AT BE CH DE ES FR GB IT LI NL SE**

(56) Entgegenhaltungen:

**IBM JOURNAL OF RESEARCH AND DEVE-
LOPMENT, Band 11, Nr. 1, Januar 1967, Seiten 34-53, New York, US; S.F.ANDERSON et
al.: "The IBM System/360 Model 91: Floating-
point execution unit"**

**COMMUNICATIONS OF THE ACM, Band 14,
Nr. 11, November 1971, Seiten 731-736, New
York, US; M.A.MALCOLM: "On accurate
floating-point summation"**

**COMMUNICATIONS OF THE ACM, Band 7, Nr.
6, Juni 1964, Seiten 355-356, New York, US;
J.M.WOLFE: "Reducing truncation errors by
programming"**

**MINI-MICRO CONFERENCE RECORD, Mai**

**1984, Seiten 10/1(1) - 10/1(10), Northeast,
New York, US; NUSRA LODHI et al.: "System
solutions for a high-speed processor using
innovative ICs"**

(73) Patentinhaber: **International Business Machines Corporation
Old Orchard Road
Armonk, N.Y. 10504(US)**

(72) Erfinder: **Unkauf, D. K., Dipl.-Ing.
Bühler Strasse 15
W-7030 Böblingen(DE)**
Erfinder: **Gerlicher, A.T., Dipl.-Ing.
Herdweg 2
W-7039 Weil im Schönbuch(DE)**
Erfinder: **Rump, S.M. Priv.-Doz. Dr.
Grafenbergstrasse 13
W-7403 Ammerbuch 5(DE)**
Erfinder: **Bleher, J. H., Dr.-Ing.
Bismarckstrasse 31
W-7440 Nürtingen(DE)**

(74) Vertreter: **Schäfer, Wolfgang, Dipl.-Ing.
European Patent Attorney, IBM Deutschland
GmbH, Schönaicher Strasse 220
W-7030 Böblingen(DE)**

## Beschreibung

Die Erfindung betrifft ein Verfahren und eine Schaltungsanordnung zur Gleitkomma-Addition.

Bei der Addition von zwei Gleitkommazahlen muß bekanntlich die kleinere Zahl solange nach rechts verschoben werden, bis die Exponenten beider Zahlen gleich sind. Der sodann bei der Addition nicht berücksichtigte Teil des kleineren Operanden, der nach der Verschiebung außerhalb der vorgesehenen Wortlänge liegt, kann mit Rest bezeichnet werden und wird üblicherweise entweder überhaupt weggelassen oder nur im Wege einer Rundung der niedersten Summenziffer berücksichtigt. Beispiele hierfür zeigen, das IBM TDB Oktober 1969, Seite 683, und das IBM TDB Oktober 1984, Seiten 3138 bis 3140.

Bei der aufeinanderfolgenden Addition von mehreren Summanden, wie sie zum Beispiel bei Vektoroperationen durchgeführt wird, können jedoch derartige Rundungen oder weggelassene Reste große Fehler verursachen. So kann es beispielsweise zur Auslöschung von relativ kleinen Operanden kommen, obwohl diese letztlich entscheidend gewesen wären, wenn zwei annähernd gleiche große Operanden voneinander subtrahiert werden. Das Resultat einer derartigen Summe hängt in der Praxis dann von der zufälligen Reihenfolge der Additionen, bzw. Subtraktionen ab.

Zur Erhöhung der Genauigkeit ist es bekannt, die mehrfache Wortlänge zu verwenden, oder die Mantisse der Gleitkommasumme zeitweise um eine Ziffer am niederen Ende zu verlängern.

Ferner ist aus der EP-B1 79 471 eine Einrichtung bekannt geworden, welche die Erzielung einer genauen Summe von Gleitkomma-Operanden gestattet. In dieser Einrichtung wird ein überlanger Akkumulator verwendet, der bei dem üblichen Exponentenbereich (z.B. + 63) einige hundert Stellen aufweist. Die einzelnen Summanden werden in dieser Einrichtung in einer Festkomma-Darstellung aufsummiert, da für jeden Exponenten- Teilbereich ein Akkumulatorregister vorgesehen ist. Die Mantissensumme kann also, sofern der Exponent passt, in ein zugehöriges Akkumulatorregister gespeichert werden. Das in dieser Einrichtung verwendete Verfahren bringt es mit sich, daß viel Übertragsoperationen durchgeführt werden müssen. Es ist klar, daß diese Übertragsoperationen mit zunehmender Länge des Akkumulators immer schwieriger werden. Bei einer Stellenanzahl von einigen Hundert Stellen kosten diese Übertragsoperationen sehr viel Zeit. Die verwendete Festkomma Darstellung erfordert außerdem zusätzliche Schiebeoperationen, damit die Summe für den Exponentenbereich der einzelnen Akkumulatorregister passend gemacht werden kann. Bei sehr großen Exponenten, wie sie in zukünftigen Rechen-Standards vorgesehen sind, ist die bekannte Einrichtung technisch wohl nur mehr mit außerordentlich hohem Aufwand realisierbar.

Ein Algoritmus zur Erzielung einer genauestmöglichen Näherung für eine Summe von Gleitkommazahlen ist in dem Artikel von G. Bohlender "Genaue Summation von Gleitkommazahlen", in "Computing", Suppl. 1, 1977, Seiten 21 bis 32, beschrieben. Nach diesem Algorithmus werden die bei den einzelnen Summationen entstehenden Reste jeweils gespeichert. Nach Aufsummierung aller Operanden werden diese Reste in einer großen Anzahl aufeinanderfolgender Durchgänge zu der Operandensumme addiert. Ziel des beschriebenen Algorithmus ist die Erzielung einer möglichst genau gerundeten Geitkommazahl für die Summe. Nachteilig in dem geschilderten Verfahren ist der große Bedarf an Speicherraum für die abzuspeichernden Reste und die hohe Anzahl von Addieroperationen der gespeicherten Reste zu der vorhandenen Summe.

Weitere Verfahren und Vorrichtungen sind aus "Communications of the ACM, Band 14, Nr. 11, November 1971, Seiten 731 bis 736" und "Mini-Micro Conference Record, Mai 1984, Seiten 10/1(1) bis 10/1(10)" bekannt.

Der vorliegenden Erfindung liegt die Aufgabe zugrunde, ein Verfahren sowie Einrichtungen anzugeben, mit denen ein exaktes Resultat einer Summe von Gleitkommazahlen bei geringem Aufwand ermittelt werden kann.

Diese Aufgabe ist durch das Verfahren nach dem Anspruch 1 und durch die Schaltungsanordnung nach dem Anspruch 6 gelöst.

Die Erfindung basiert auf der Abtrennung des Restes des kleineren Operanden und Ausgabe dieses Restes in normalisierter Gleitkomma-Darstellung. Hierdurch ist einerseits die Verarbeitung des Restes mit den gleichen Gleitkomma-Addierstufen möglich, wie sie auch zur Erzielung der Mantissensumme von zwei Operanden verwendet werden und wird andererseits eine Vereinheitlichung der verwendeten Einrichtungen erzielt, was sich günstig auf eine Halbleiter-Großintegration auswirkt. Außerdem kann der entstehende Rest sofort weiterverarbeitet werden, wodurch ein Zeitgewinn erzielt wird. Die Erfindung ist gut verträglich mit bestehenden Rechner-Strukturen. Auch bei sehr großen Exponentenbereichen, wie zum Beispiel etwa + 5000 gemäß neuer Rechen-Standards, bleibt der Aufwand nach der vorliegenden Erfindung gering, da nicht von vornherein der gesamte Exponentenbereich mit Rechen- und Speichereinrichtungen abgedeckt werden muß, sondern die Anforderungen sich nur nach dem vorliegenden Rechenproblem richten.

Hierdurch wird eine große Flexibilität erzielt, indem Speicher- und eventuell auch Recheneinrichtungen nur bei Bedarf zugeschaltet werden müssen. Die nach der Erfindung verwendeten Addierer haben nur die einfache Länge der Mantisse und erlauben somit rasche Übertrags-Operationen.

Nach der parallelen Arbeitsweise der vorliegenden Erfindung (Anspruch 2), welche eine Hintereinanderschaltung von Addierstufen in Form einer Pipelineanordnung vorsieht, wird vor allem bei einer hohen Anzahl von Operanden ein großer Geschwindigkeitsvorteil erzielt, da eine ganze Reihe von Additions-Operationen bezüglich Eingangs-Operanden, Zwischensummen und Zwischenresten gleichzeitig durchgeführt werden kann.

Die serielle Arbeitsweise gemäß der vorliegenden Erfindung (Anspruch 3) gestattet die Verwendung einer einfachen Einrichtung mit nur einer Gleitkomma-Addierstufe. Für die Darstellung der Summe wird eine Vielzahl von Speicherregistern benötigt, deren Anzahl sich nach dem vorliegenden Problem richtet und daher variabel gehalten werden kann. Eine Rekonfiguration vorhandener Einrichtungen ist also möglich.

Vorteilhafte Ausgestaltungen der Erfindung sind in den weiteren Unteransprüchen enthalten.

Die Erfindung soll nun in ihrer parallelen und seriellen Arbeitsweise in jeweils einem in den Fign. dargestellten Ausführungsbeispiel beschrieben werden. Es zeigen:

| | |
|---|---|
| Fig. 1 | ein in der vorliegenden Beschreibung verwendetes Datenformat, |
| Fig. 2 | eine aus den Fign. 2A und 2B bestehende Gleitkomma-Addierstufe mit Restberechnung, |
| Die Fign. 3 bis 5 | in Tabellenform drei Additionsbeispiele, |
| Fig. 6 | eine Hintereinanderschaltung von Gleitkomma-Addierstufen gemäß Fig. 2 in Pipelineform zur Erzielung einer parallelen Arbeitsweise, Fig. 7 ein die Fig. 6 betreffendes Additionsbeispiel, |
| Fig. 8 | eine Schaltungsanordnung mit einer einzelnen Addierstufe gemäß Fig. 2 zur Realisierung einer seriellen Arbeitsweise, |
| Fig. 9 | in den Fig. 9A und 9B, ein Additionsbeispiel zur Erklärung der Wirkungsweise, der in Fig. 8 gezeigten Einrichtung. |

Das Additionsverfahren soll nachfolgend an zwei einfachen Beispielen erläutert werden. Dabei wird der Einfachheit halber mit dezimalen Gleitkommazahlen mit 4 Mantissenziffern gerechnet.

In der Darstellung 1.234E3 stellt die Ziffernfolge 1.234 die Mantisse dar, welche hier definitionsgemäß eine von Null verschiedene Ziffer von dem Dezimalpunkt haben soll. E3 bedeutet, daß die Stelle vor dem Komma die Wertigkeit $10^3$ hat, d.h. der Exponent ist 3.

1. Addition von 5 Gleitkommazahlen:

$$1.000E9 + 2.000E7 + 3.000E5 + 4.000E3 + 5.000E1$$

Durch Umwandlung in Festkommadarstellung läßt sich
die exakte Summe leicht ermitteln:

```
      1 000 000 000
         20 000 000
            300 000
              4 000
                 50
      _____

Exakte  Summe = 1 020 304 050 = 1.020 304 05 E9
```

Die herkömmliche Gleitkomma-Addition mit 4 Mantissenziffern ergibt:
1.020E9
d.h., der Rest von 3,04050E5 bleibt im Ergebnis und in eventuell folgenden Berechnungen unberücksichtigt.

2. Addition von 6 Gleitkommazahlen, wobei Auslöschung auftritt:

```
Zahl I        II        III       IV        V        VI
        1.000E9+2.000E7+3.000E5+4.000E3+5.000E1-1.020E9
```

Durch Umwandlung in Festkommadarstellung läßt sich die exakte Summe leicht ermitteln:

```
                                    1 000 000 000
                                       20 000 000
                                          300 000
                                            4 000
                                               50
                                -   1 020 000 000
                                    ─────────────────
            Exakte Summe =           304 050 = 3.0405 E5
```

Die Gleitkomma-Addition mit 4 Mantissenziffern ergibt:
0.000

Es kann leicht gezeigt werden, daß die obige Auslöschung von der willkürlichen Reihenfolge der einzelnen Summanden abhängt. Vertauscht man nämlich die Zahlen III und VI so ergibt sich als Ergebnis:
3.040E5

Dieses Ergebnis ist bereits wesentlich genauer als das erste (das 0.000 ergab). Jedoch fällt auch hier der Summand 5.000E1 unter den Tisch.

Es ist also wichtig, ein exaktes Summenergebnis zu erzielen, das von der willkürlichen Reihenfolge der einzelnen Summanden unabhängig ist.

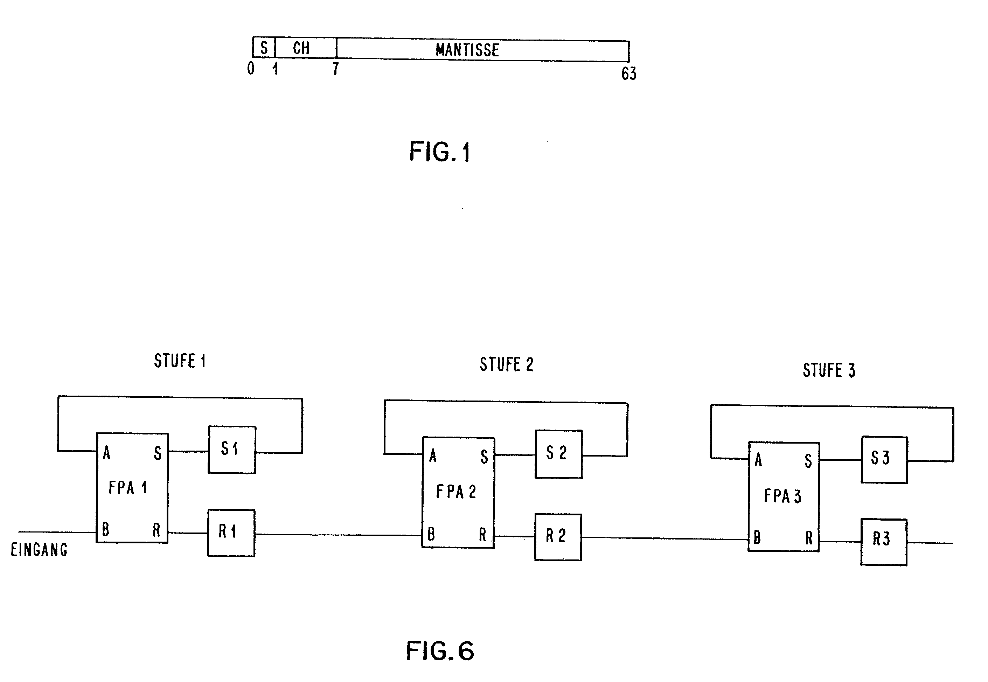

Fig. 1 zeigt das im nachfolgenden Ausführungsbeispiel verwendete Datenformat. Die 64 Bits des Datenwortes haben folgen Zuordnung:

Bit 0:          Vorzeichen S der Mantisse. Die Mantisse ist positiv, wenn das Vorzeichen Bit "0" ist.

Bits 1 bis 7:   Charakteristik CH der Mantisse. Die Charakteristik ergibt sich aus dem Exponenten der Mantisse durch Addition der dezimalen Zahl 64 (hex 40). Demnach entsprechen die hexadezimalen Werte der Charakteristik von 00 bis 40 einem dezimalen Exponenten von -64 bis 0 und die Charakteristikwerte hex 41 bis hex 7F einem positiven Exponenten von 1 bis 63.

Bits 8 bis 63:  Eine Mantisse von 14 hexadezimalen Ziffern. Die niederste Mantissenziffer umfaßt dabei die Bit 60 bis 63.

Ferner wird nachfolgend die Mantisse mit einer Null vor dem Komma dargestellt, wobei die erste hexadezimale Ziffer nach dem Komma von Null verschieden sein muß.

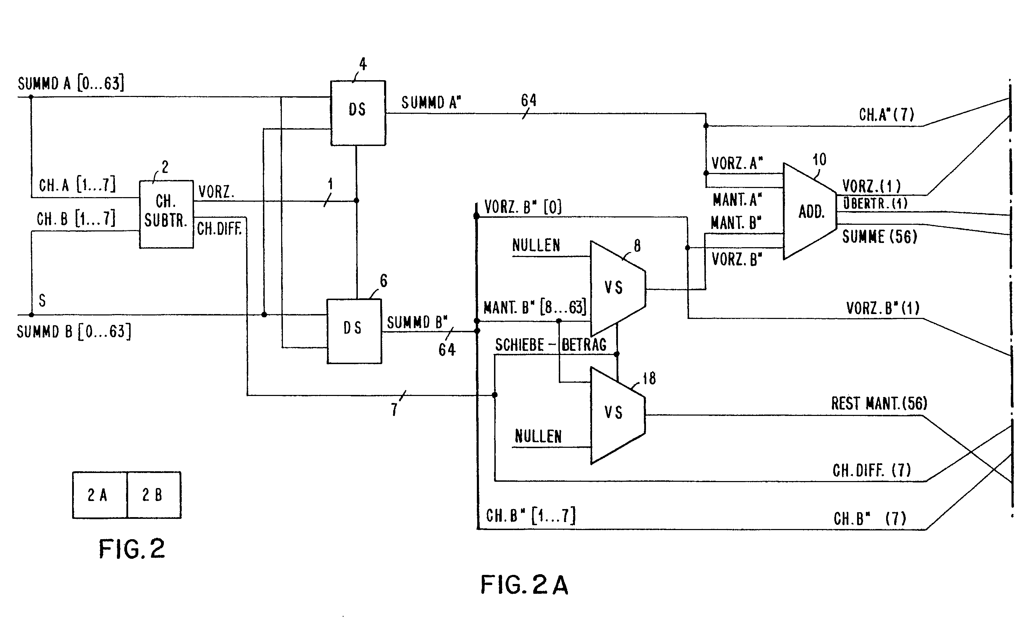

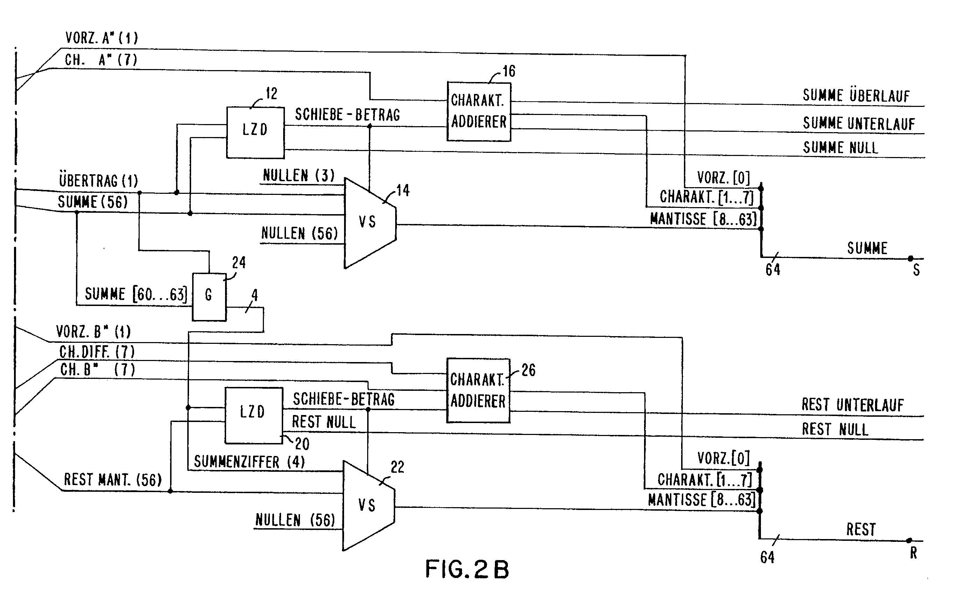

Eine erfindungsgemäße Gleitkomma-Addierstufe ist in der Fig. 2, die aus den Fign. 2A und 2B besteht, dargestellt. In der Figur bedeuten die Zahlen in eckigen Klammern die jeweiligen Bitpositionen und die Zahlen in runder Klammer die Anzahl Bits auf der jeweiligen Leitung. Diese Anzahl wird stellenweise auch durch einen Schrägstrich mit Zahl dargestellt.

Die beiden Summanden A und B werden je einem Datenschieber (DS) 4 und 6 zugeführt. Die Charakteristiken der beiden Zahlen Ch A und Ch B werden einem Charakteristiksubtrahierer 2 zugeführt, an dessen Ausgang die Charakteristikdifferenz und das Vorzeichen der Subtraktion erhältlich sind. Ist Ch A ≧ Ch B, so werden die beiden Datenwähler 4 und 6 über das Vorzeichensignal derart gesteuert, daß der Summand A vom Datenwähler 4 durchgelassen wird und der Summand B vom Datenwähler 6. Im anderen Fall werden die beiden Summanden von den Datenwählern vertauscht und es gelangt somit der Summand B auf die obere Sammelleitung in Fig. 2A und der Summand A auf die untere Sammelleitung. Auf diese Art gelangt der größere Summand immer auf die obere Sammelleitung und ist dort mit A″ bezeichnet. Der Summand auf der unteren Sammelleitung ist mit B″ bezeichnet.

Um zwei Gleitkommazahlen addieren zu können, muß erst die Mantisse der kleineren Zahl derart nach

EP 0 265 555 B1

rechts verschoben werden, daß beide Exponenten gleich werden. Die durch diese Verschiebung aus der Mantissenbreite (14 hexa- dezimale Ziffern) des Computers herausgeschobenen Ziffern (Rest), sind ohne weitere Maßnahmen für die Rechnung verloren. Die Verschiebung wird durch den Verschieber 8 durchgeführt, wobei das Ausmaß der Verschiebung von der Charakteristikdifferenz gesteuert wird. Der Verschieber 8 ist ein sogenannter "Trichter-Verschieber" (Funnel-Schifter). Die Eingangsbreite des Verschiebers beträgt 2 × 56 Bits und die Ausgangsbreite 1 × 56 Bits. Durch die Verschiebung nach rechts entstehen am linken Ende leere Ziffern, die, wie beim Verschieber 8 gezeigt mit Nullen aufgefüllt werden müssen. Hiernach können die Mantissen der beiden Summanden im Mantissenaddierer 10 addiert werden. Zur Durchführung der Addition werden dem Mantissenaddierer 10 auch die Vorzeichen der beiden Mantissen zugeführt. Am Ausgang des Mantissenaddierers erhält man die wieder aus 56 Bits bestehende Summe der beiden Mantissen, ein Signal, das einen eventuellen Übertrag angibt und ein Vorzeichensignal der Summe. In einem nachfolgenden Detektor für führende Nullen (LZD) 12 werden führende hexadezimale Nullziffern festgestellt und die Mantisse zur Normalisierung durch einen Verschieber 14 entsprechend nach links verschoben. Dabei müssen dann die niederen Stellen entsprechend, wie gezeigt, mit Nullen aufgefüllt werden.

Entsteht bei der Bildung der Summe im Addierer 10 ein Übertrag, so muß die Mantissensumme im Verschieber 14 um eine Stelle nach rechts verschoben werden, um Platz zu machen für die am linken Ende einzufügende hexadezimale Ziffer 0001. Zur Einfügung der 000 in dieser Ziffer ist ein entsprechender Eingang am Verschieber 14 vorgesehen.

Wenn keine führenden Nullen und kein Übertrag festgestellt werden, so ist die Charakteristik der Summe gleich der Charakteristik des Operanden A". Im anderen Falle muß der Charakteristikaddierer 16 die Charakteristik der Summe entsprechend modifizieren. Am Ausgang der Addierstufe werden in Bezug auf die Summe folgende Signale erhalten:

- Ein aus 64 Bits bestehendes Summensignal S.
- Ein Signal "Summe Überlauf". Dieses Signal zeigt an, daß der zur Verfügung stehende Exponentenbereich überschritten wurde, und daß eine Weiterführung der Rechnung ohne Re-Scalierung nicht möglich ist.
- Summe Unterlauf. Dieses Signal zeigt entsprechend an, daß der Bereich für negative Exponenten überschritten wurde.
- Summe 0. Dieses Signal zeigt an, daß alle Ziffern der Summe 0 sind. Mit Hilfe dieses Signals können unter Umständen unnötige Verfahrensschritte übersprungen werden.

Erfindungsgemäß kann mit der in Fig. 2 gezeigten Addierstufe auch ein Rest ausgeben werden, der ebenfalls entsprechend Fig. 1 aus 64 Bits besteht.

Hierzu ist wichtig darauf hinzuweisen, daß bezüglich der relativen Lage, der beiden Summanden A" und B" 3 Fälle möglich sind:

1. Die beiden Charakteristiken der beiden Summanden waren von Haus aus gleich. In diesem Falle überlappen sich die Mantissen voll, und es entsteht im Normalfall kein Rest. Im Ausnahmefall, d.h. wenn ein Summenübertrag auftritt, muß wohl die Summe um eine Stelle nach rechts verschoben werden, so daß die niederste Stelle der Summe aus der Wortlänge herausfällt und als Rest weiter verarbeitet werden kann.

2. Die Mantissen überlappen sich teilweise. In diesem Fall wird der überlappende Teil, d.h. die höheren Ziffern der verschobenen Mantisse B" zur Mantisse A" addiert, während die verbleibenden niederen Ziffern als Rest weiterverarbeitet werden.

3. Die Mantissen überlappen sich nicht. In diesem Fall muß die gesamte Mantisse B" als Rest abgetrennt werden.

Zur Erzeugung des Restes ist erfindungsgemäß ein Verschieber 18 vorgesehen, der wie der Verschieber 8 ausgeführt ist und die betreffenden niederen Stellen der Mantisse B" als Rest abtrennt. Die restlichen Stellen der abgetrennten Mantisse B" müssen dann, wie an VS 18 gezeigt, mit Nullen aufgefüllt werden. Auch für die Restmantisse ist ein Detektor für führende Nullen (LZD) 20 vorgesehen, der einen Verschieber 22 steuert. Die Verschiebung im Verschieber 22 hängt außer von der Anzahl führenden Nullen auch davon ab, ob die Summe der beiden Mantissen A" und B" einen Übertrag ergab. Wenn ja muß, wie bereits oben beschrieben, die Summenmantisse um eine Stelle nach rechts verschoben werden, so daß die niederste Stelle (Bits 60 - 63) der Summenmantisse herausgeschoben und über den Verschieber 22 in die Restmantisse an führender Stelle hineingeschoben wird. In diesem Fall ist eine Verschiebung der Restmantisse um 1 nach rechts erforderlich. Da ein Summenübertrag nur bei teilüberlappenden Mantissen A" und B" auftreten kann, ist die niederste Stelle der Restmantisse immer Null, so daß die Verschiebung der Restmantisse um eine Stelle nach rechts keine Schwierigkeiten bietet. Die aus der Summenmantisse an niederster Stelle herausgeschobene hexadezimale Ziffer mit den Bitpositionen 60 - 63 wird über eine

5

Torschaltung 24 an den Verschieber 22 geleitet. Die Torschaltung 24 läßt diese Ziffer dann durch, wenn das Summenübertragssignal "1" ist. Diese aus der Summe herausgeschobene Ziffer kann Null sein, so daß die betreffenden 4 Bits auch dem Detektor 20 zugeführt werden müssen.

Die Charakteristik des Restes wird im Charakteristikaddierer 26 berechnet. Sie ergibt sich aus:

$$CH_R = CH_{B''} + SHMT - (E - CH_D).$$

Hierin bedeutet:

$CH_R$ = Charakteristik des Restes,
$CH_{B''}$ = Charakteristik des Operanden B",
SHMT = der vom Detektor 20 ausgegebene Schiebebetrag,
E = Wortlänge der Mantisse, d.h. im vorliegenden Beispiel 14 hexadezimale Ziffern (hexadezimal E),
$H_D$ = die vom Subtrahierer 2 ausgegebene Charakteristik-Differenz. Da diese im vorliegenden Beispiel vereinbarungsgemäß höchstens dezimal 14, d.h. hex. E, betragen soll, genügen 4 Leitungen am Ausgang des Subtrahierers 2.

Hierbei laufen die Werte für SHMT von 1 bis -E, und von $CH_D$ von 0 bis E.

Der 64 Bit lange Rest in Gleitkomma-Darstellung ist somit am Ausgang der Schaltung (Punkt R) erhältlich.

Ähnlich wie bei der Summe, kann auch für den Rest ein Unterlauf festgestellt werden, was eine Re-Scalierung der Berechnung nötig macht.

Ein wichtiges Signal der Schaltung ist das Signal "Rest Null", wie weiter unten noch näher ausgeführt wird.

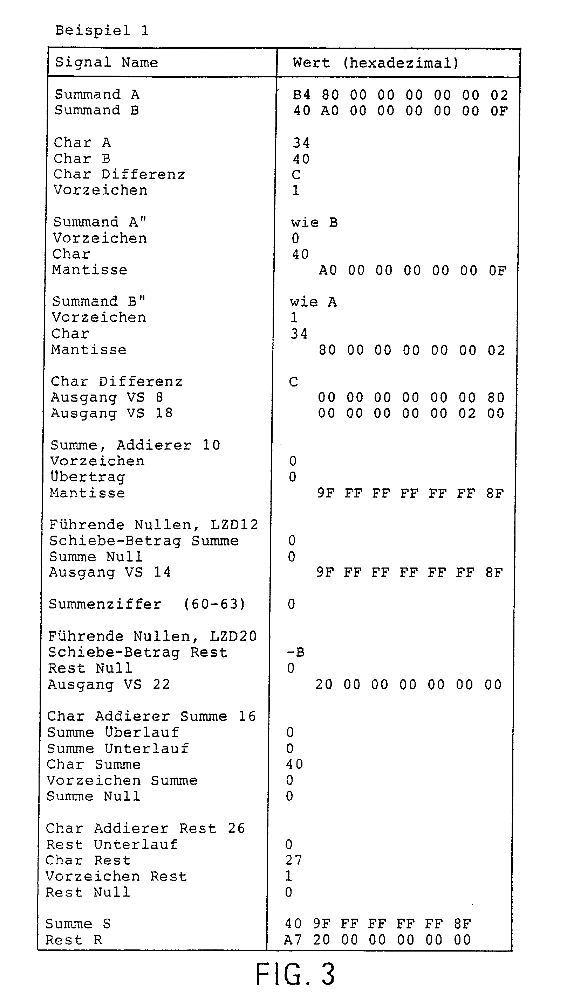

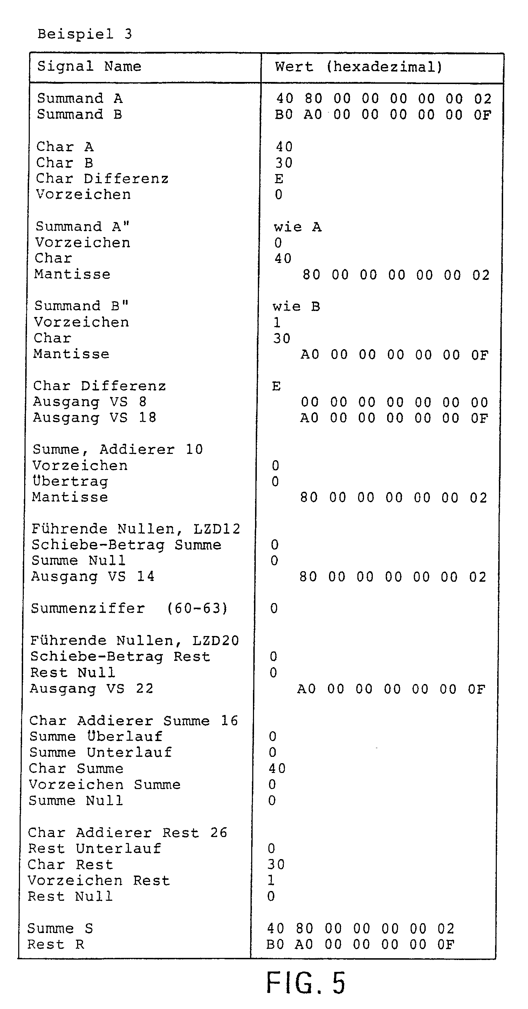

Zum besseren Verständnis der in Fig. 2 dargestellten Schaltung sind in den Fign. 3 bis 5 in Tabellenform drei Additionsbeispiele dargestellt.

Im ersten Beispiel (Fig. 3) wird zu einem negativen Summanden A ein positiver Summand B addiert. Die beiden Operanden sind in der Tabelle mit hexadezimalen Ziffern dargestellt. Die beiden Ziffern ganz links des Summanden A sind B4, d. h. 1001 0100. Das erste Bit ganz links gibt das Vorzeichen an. Da dieses Bit den Wert "1" hat ist der Summand A negativ. Die restlichen 7 Bits 011 0100, d.h. 34, stellen die Charakteristik dar.

Die ersten beiden Ziffern des Summanden B lauten 40, d.h. 0100 0000. Das erste Bit ganz links ist 0 und daher ist der Summand B positiv. Die Charakteristik des Summanden B hat den hexadezimalen Wert 40. Da die Chrakteristik von B größer ist als die Charakteristik A, ist das Vorzeichen Bit am Ausgang des Charakteristiksubtrahierers 2 = "1", und daher vertauschen die beiden Datenwähler 4 und 6 die Summanden. Der Summand A wird also zum Summanden B" und der Summand B zum Summanden A", da immer der größere der beiden Summanden auf die obere Sammelleitung geleitet wird. Die Differenz der beiden Charakteristiken beträgt C (dezimal 12). Die niedersten beiden Ziffern von B überlappen sich also mit den beiden höchsten Mantissenziffern von A. Die restlichen 12 Ziffern von A werden vom Verschieber 18 als Rest abgetrennt.

Die Tabelle zeigt außerdem die Ausgangssignale der restlichen in Fig. 2 dargestellten Einheiten. Am Ende der Tabelle sind die am Ausgang S (für Summe) R (für Rest) erhaltenen Signale nochmals in übersichtlicher Form dargestellt.

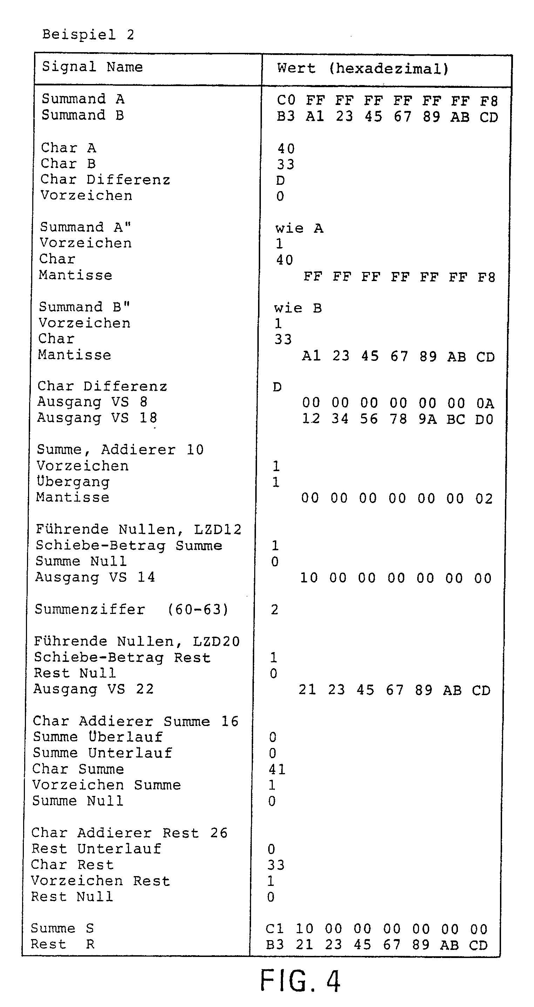

In dem in Fig. 4 dargestellten 2. Beispiel werden 2 negative Summanden, deren Mantissen sich teilweise überlappen, addiert. Dieses Beispiel zeigt die Arbeitsweise der Schaltung, wenn vom Mantissenaddier 10 ein Übertragssignal ausgeben wird, und demgemäß die niederste Mantissenziffer der Summe in den Rest hineingeschoben werden muß.

Im dritten Beispiel wird zu einem positiven Summanden A ein negativer Summand B addiert. Die Mantissen der beiden Operanden überlappen sich nicht. Die Differenz der beiden Charakteristiken beträgt hexadezimal 10 (dezimal 16). Wie oben bereits beschrieben gibt der Charakteristiksubtrahierer 2 jedoch maximal eine Charakteristikdifferenz von E (dezimal 14) aus, da die Stellenanzahl der Mantissen auch nur E beträgt. Im Charakteristikaddierer 26 für den Rest wird diese, zu geringe, Differenz dann wieder auf die richtige Differenz erhöht. Der gesamte Summand B wird also in diesem Beispiel als Rest ausgeben.

Die in Fig. 2 gezeigte Anordnung ist in rein kombinatorischer Logik ausgeführt. Sie kann auch in sequentieller Logik ausgeführt werden, unter Verwendung von Zwischenspeichern und mit mehrfacher Benutzung der wesentlichen Funktionsgruppen, wie z.B. Addierer, Schiebeeinrichtungen usw.. Dabei kann der Gesamtaufwand erheblich reduziert werden, wobei aber die Verarbeitungsgeschwindigkeit geringer wird.

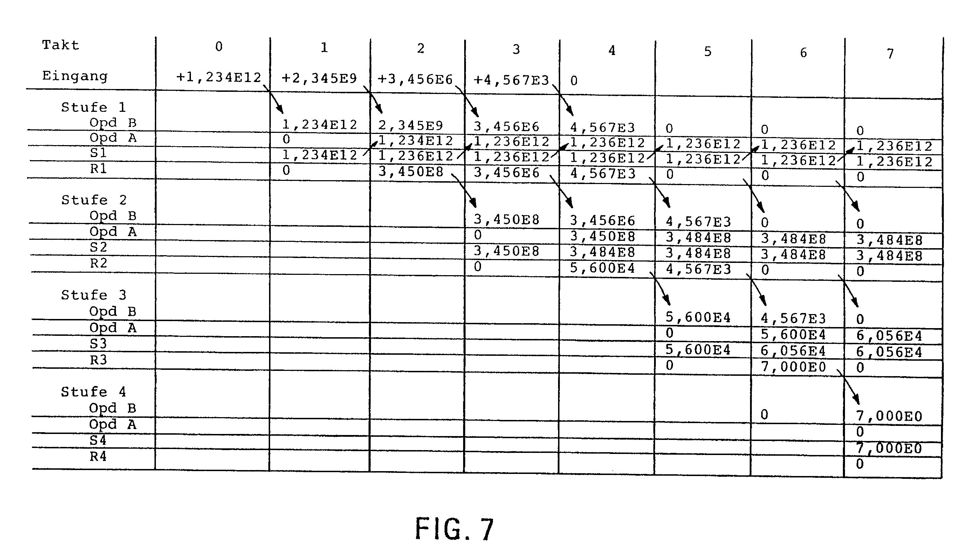

Fig. 6 zeigt drei hintereinander geschaltete Gleitkomma-Addierstufen FPA1 bis FPA3. Die Anzahl drei ist willkürlich gewählt, und es können mehr Addierstufen FPA vorgesehen werden. Eine Addierstufe entspricht

6

dabei der in Fig. 2 gezeigten Anordnung und empfängt also am Eingang die Summanden A und B und liefert am Ausgang das Summensignal S und das Restsignal R.

Ferner enthält die in Fig. 6 gezeigte Anordnung zwischen jeweils zwei Addierstufen ein Paar von Registern zur Speicherung des Summen- und des Restsignales. Am Eingang der Schaltung werden nacheinander die zu summierenden Operanden angelegt. Die Anordnung nach Fig. 6 kann beispielsweise bei Vektoroperationen verwendet werden, wo nacheinander eine Vielzahl von Operanden zu summieren sind. Vor der Zuführung eines neuen Operanden werden die Register zur Aufnahme des neuen Wertes getaktet. Um Instabilitäten in der Anordnung zu vermeiden, müssen die Register entweder flankengesteuert sein oder aus Master-/Slave-Kippschaltungen zusammengesetzt sein.

Das in der gezeigten Pipelineanordnung erzeugte Summensignal wird jeweils im folgenden Takt vom Summenregister an den A Eingang derselben Stufe zurückgeführt, während das erzeugte Restsignal an den B Eingang der folgenden Stufe weitergeleitet wird. Auf diese Weise werden in einer Stufe erzeugte Reste in der Pipelineanordnung immer weitergeschoben, wenn sie nicht in dieser Stufe aufgearbeitet werden können, und werden zugleich immer kleiner. Nachdem die Zuführung der Operanden beendet ist, werden diese Reste aufgearbeitet und schließlich speichern alle Restregister Null. Mit Hilfe des vom Detektor für führende Nullen 20 in Fig. 2B gezeigten Signales "Rest Null" kann also festgestellt werden, wann die Aufsummierung aller Summanden beendet ist und das exakte Ergebnis in den Summenregistern steht. Die Anzahl der benötigten Gleitkomma-Addierstufen hängt dabei natürlich vom jeweiligen Problem ab. Untersuchungen zeigen, daß mit einer geringen Anzahl von Stufen ein sehr hoher Prozentsatz aller in der Praxis auftretenden Rechenprobleme bewältigt werden kann. Die Anzahl der notwendigen Stufen hängt von der Mantissenlänge ab, sie nimmt mit größeren Mantissenlängen ab. Bei den üblichen Mantissenlängen von 52-56 Bit (64 Bit Wortlänge) reichen 4-5 Stufen für die allermeisten praktischen Probleme.

Zum besseren Verständnis der in Fig. 6 gezeigten Anordnung ist in Fig. 7 in Tabellenform ein Rechenbeispiel gezeigt. Der Einfachheit halber werden dabei positive Summanden angenommen und die Darstellung der Ziffern ist dezimal. Es sollen die vier Operanden:

$$1{,}234E12 + 2{,}345E9 + 3{,}456E6 + 4{,}567E3$$

aufaddiert werden. Wie die Tabelle zeigt, werden diese vier Operanden nacheinander in den ersten vier Takten 0-3 am Eingang der Schaltung angelegt. Im ersten Takt erscheint der erste Summand am B-Eingang der Stufe 1. (Die Übertragung von einzelnen Operanden, Summen oder Resten ist in Fig. 7 stellenweise durch kleine Pfeile dargestellt). Da am Eingang A der Stufe kein Signal anliegt, ist dieser Operand B der größere und wird im Summenregister S1 gespeichert. Im zweiten Takt wird dann in der Stufe 1 dieser erste Operand zum zweiten Operand addiert. Die Operanden überlappen sich teilweise, und zwar in der letzten Dezimalziffer des ersten Operanden. Das Ergebnis wird im Summenregister S1 und der entstehende Rest, d.h. der vom Operanden B abgetrennte Teil mit Ergänzung einer Null an der niedersten Stelle im Restregister R1 gespeichert. Im dritten Takt wird dieser Rest an den Eingang B der Stufe 2 geliefert und nach Durchlaufen dieser Stufe im Summenregister S2 gespeichert. In der Stufe 1 wird zugleich der dritte Operand zum Inhalt des Registers S1 addiert. Dabei entsteht wieder ein Rest, der im Restregister R1 gespeichert wird und im Takt 4 an den Eingang B der Stufe 2 geliefert wird. Da in dieser Stufe 2 nun aber bereits im Summenregister S2 ein von Null verschiedener Wert gespeichert war, wird eine Addition in dieser Stufe ausgeführt, wobei das Ergebnis im Summenregister S2 gespeichert wird und der entstehende Rest im Restregister R2. Wie durch die Pfeile angedeutet, ist zu sehen, daß mit jedem neuen Takt der im Summenregister einer Stufe gespeicherte Wert an deren Eingang A angelegt wird, während ein eventuell gespeicherter Rest an den Eingang B der nächsten Stufe geliefert wird. In jeder Stufe gelangt der größere Operand in Übereinstimmung mit der in Fig. 2 gezeigten Arbeitsweise und vermehrt um den überlappenden Teil des kleineren Operanden ins Summenregister.

Wie in Fig. 7 zu sehen ist, ist im Takt 7 die Rechenoperation beendet: es werden keine neuen Operanden mehr zugeführt und in allen Restregistern R1 bis R4 sind nur Nullen gespeichert. Das Ausgangssignal "Rest Null" jeder Addierstufe liefert also eine binäre Eins, was leicht mit einem UND-Glied festgestellt werden kann und die Rechenoperation ist damit beendet. Das exakte Ergebnis steht in den Summenregistern S1 bis S4 und lautet:

$$1{,}236E12 + 3{,}484E8 + 6{,}056E4 + 7{,}0000E0$$

Die zeitliche Durchführung des Rechenverfahrens bietet keine Schwierigkeiten, so daß auf die Darstellung einer geeigneten Ablaufsteuerung verzichtet wurde, zumal ja anhand der Beispiele bereits im Detail beschrieben wurde, welche Operationen in den einzelnen Phasen des Rechenvorgangs durchgeführt

EP 0 265 555 B1

werden müssen.

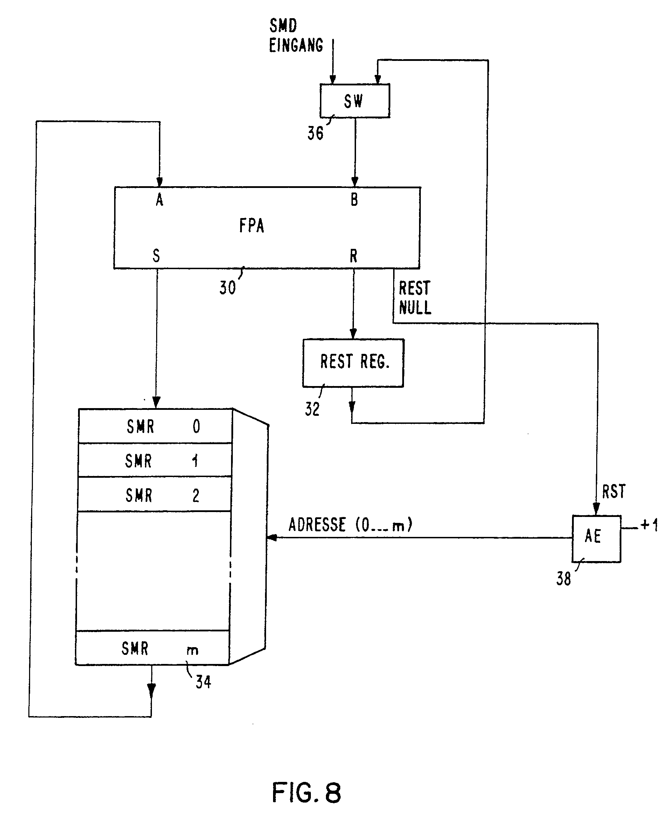

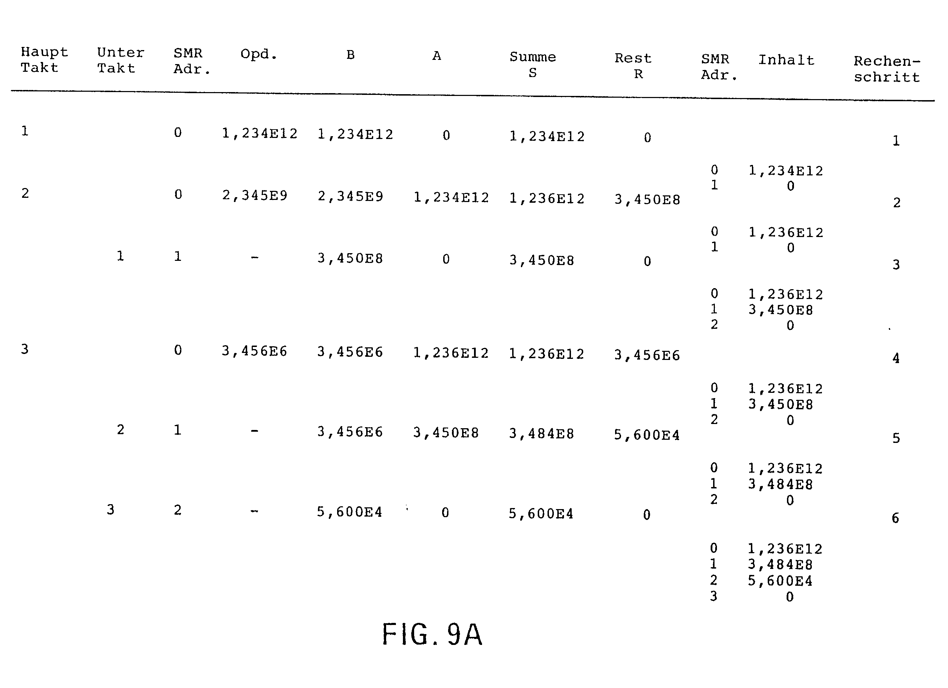

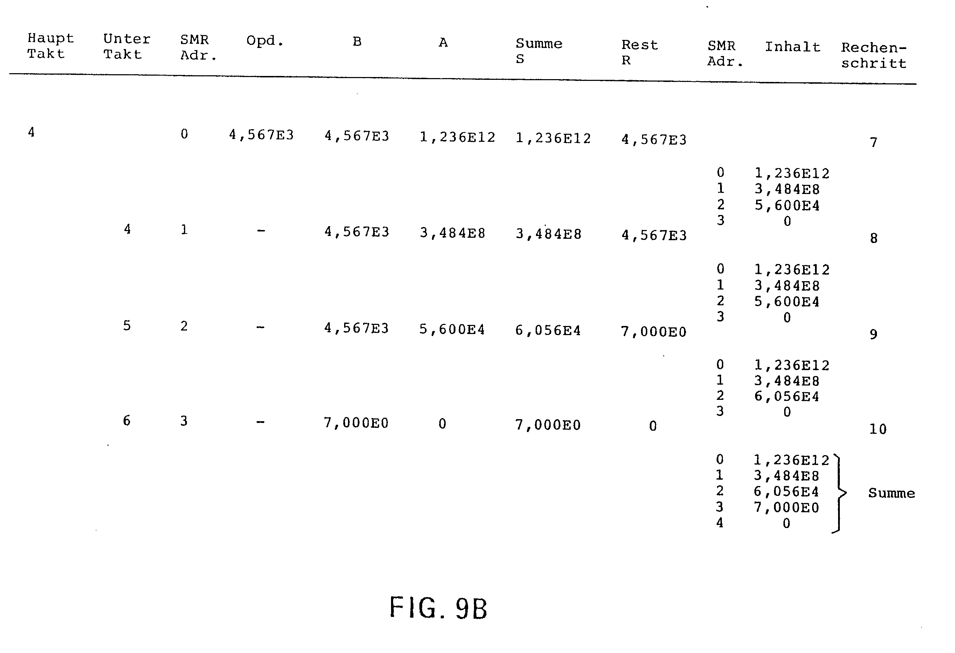

Fig. 8 zeigt eine Anordnung mit einer einzelnen Addierschaltung (FPA) 30, einem Restregister 32 und einen aus mehreren Summenregistern SMF0 - SMRm bestehenden Registerstapel 34. Der Eingang B der Addierschaltung kann über einen Umschalter 36 mit einem Operandeneingang oder mit dem Ausgang des Restregisters verbunden werden. Nach Zuführung eines Operanden wird dieser Schalter umgeschaltet, so daß nunmehr der Eingang B mit dem Ausgang des Restregisters verbunden ist. Der Inhalt des Restregisters wird nun in geeigneter Weise nacheinander zu den Inhalten der Summenregister addiert, bis schließlich im Restregister nur Nullen gespeichert sind. Sodann wird der Umschalter am Eingang B umgelegt und ein neuer Operand zugeführt. Nach dieser Zuführung wird der Schalter wieder umgelegt und der Additionsvorgang wiederholt sich, bis wieder im Restregister nur Nullen gespeichert sind. Nach Zuführung aller Operanden steht also das exakte Ergebnis in den Summenregistern, während das Restregister nur Nullen speichert. Ein in Fig. 9 gezeigtes Beispiel soll diesen Ablauf im einzelnen verdeutlichen.

In diesem Beispiel wurden für die Operanden die selben Zahlenwerte verwendet wie in Fig. 7. Es soll nun die Bedeutung der einzelnen Spalten der in den Teilfign. 9A und 9B gezeigten Tabelle erläutert werden.

Die Spalte ganz links ist mit "Haupttakt" bezeichnet. Zu einem solchen Zeitpunkt verbindet der Umschalter 36 den Eingang B mit dem Operandeneingang, das heißt es wird ein neuer Operand zugeführt.

Die nächste Spalte gibt eventuelle Untertakte zum Haupttakt an. In einem Untertakt wird der Inhalt des Restregisters 32 zu einem Speicherregister SMR addiert. Die Adresse des jeweils betroffenen Registers ist in der nächsten Spalte angeben.

Die nächste Spalte zeigt den Zahlenwert des am Operandeneingang anliegenden Operanden SMD.

Die nächste Spalte gibt den Zahlenwert des am Eingang B anliegenden Operanden an.

Die nächste Spalte zeigt den Zahlenwert des am Eingang A anliegenden Operanden, der aus dem Speicherregister SMR mit der links angebenen SMR Adresse aus gelesen wurde.

Die nächste Spalte zeigt die Summe der beiden Oper anden A und B.

Die nächste Spalte zeigt den Inhalt des Restregisters 32. Ist dieser Inhalt Null, so folgt als nächstes ein Haupttakt, d. h. es wird ein neuer Operand vom Operandeneingang zugeführt. Die nächsten beiden Spalten zeigen die Adresse eines Speicherregisters SMR und dessen Inhalt.

Die letzte Spalte gibt den jeweiligen Rechenschritt an.

Im Rechenschritt 1 wird der erste Operand 1,234E12 am Eingang B angelegt. Am Eingang A liegen nur Nullen. Die Summe entspricht daher dem Operanden B und wird im Register SMR0 gespeichert.

Da der Inhalt des Restregisters Null ist erfolgt wieder ein Haupttakt, d. h. es wird der nächste Operand, 2,345E9, angelegt und zum Register SMR 0 addiert. Dabei entsteht ein Rest 3,450E8 der im Restregister 32 gespeichert wird. Es muß nun also ein Untertakt eingeschoben werden, in dem der Inhalt des Restregisters (am Eingang B) zum Inhalt des nächsten Speicherregisters (SMR 1) addiert wird. Dieser Inhalt ist Null, so daß hiernach auch im Restregister nur Nullen gespeichert werden und die Summe im Register SMR 1 gespeichert wird. Es zeigt sich auch hier wieder, daß die Feststellung eines Null-Inhaltes des Restregisters sehr wichtig ist und deshalb wurde auch in Fig. 8 der entsprechende Ausgang der Addierstufe nochmals gezeigt. Es ist auch möglich den Registerstapel mit nur wenigen Registern auszurüsten. Weitere Register werden nur bei Bedarf angefordert; ein Bedarf an einem weiterem Register liegt vor, wenn nach dem Abspeichern in das derzeitige letzte Register des Stapels noch ein von Null verschiedener Rest vorliegt.

Es folgt nun Haupttakt 3 und es wird der Operand 3,456E6 angelegt und zum Inhalt von SMR 0 addiert. Das Ergebnis wird in SMR 0 gespeichert und der entstehende Rest muß in den beiden darauffolgenden Untertakten zu den Inhalten der Register SMR 1 und SMR 2 addiert werden.

Es folgt nun der Haupttakt 4 in dem der letzte Operand 4,567E3 zum Inhalt des Registers SMR 0 addiert wird. Der entstehende Rest wird in den darauffolgenden Untertakten 4 5 und 6 zu den Inhalten der Register SMR 1, SMR 2 und SMR 3 addiert.

Im Rechenschritt 10 ist der Inhalt des Restregisters Null und kein weiterer Operand am Operandeneingang verfügbar, so daß nun das Endergebnis im Registerstapel 34, d. h. genauer gesagt in den Registern SMR 0 bis SMR 3 steht.

Zusammenfassend ergibt sich also, daß bei einem Inhalt des Restregisters von Null ein neuer Operand zugeführt und zum ersten Speicherregister SMR0 aufsummiert wird, und daß in darauffolgenden Untertakten der jeweilige Inhalt des Restregisters aufeinanderfolgend zu den weiteren Speicherregistern solange addiert wird, bis im Restregister wieder Null gespeichert ist. Die Anzahl Untertakte pro Haupttakt ist also variabel.

In dem in Fig. 9 gezeigten Beispiel werden 10 Rechenschritte benötigt, um zum exakten Ergebniss zu gelangen.

Im Beispiel nach Fig. 7 sind es hingegen nur 7 Takte. Dies folgt daraus, daß in Fig. 6 alle Addierstufen

8

zugleich arbeiten, wie aus Fig. 7 ohne weiteres ersichtlich ist, während in Fig. 8 nur eine einzige Addierstufe verfügbar ist und die nötigen Rechenoperationen nacheinander ausgeführt werden müssen. Zur Addressierung des Speichers 34 braucht die jeweilige Adresse nur jeweils um 1 erhöht zu werden. Die Adresse wird auf Null zurückgestellt wenn ein Haupttakt erfolgt, d.h., wenn das Register 32 Null speichert.

Hierzu ist in Fig. 8 eine Adressiereinheit (38) gezeigt, welche einen Adressen-Rückstelleingang RST aufweist, die mit dem Ausgang "Rest Null" der Addierstufe 30 verbunden ist.

Der zeitliche Ablauf innerhalb eines Haupt- oder Untertaktes erfolgt so, daß zuerst der Speicher 34 gelesen wird und die Daten zur Addierstufe 30 übertragen werden, und daß so dann der Operandeneingang oder das Restregister dem Eingang B der Addierstufe 30 zugeführt wird und die entstehenden Summen- und Restsignale abgespeichert werden.

Die nach den dargestellten Verfahren ermittelte exakte Summe wird durch eine Folge von Gleitkommazahlen dargestellt. Im allgemeinen hat diese Folge noch nicht die Eigenschaften, daß die Elemente nach Größe geordnet sind, und daß sich die Mantissen nicht überlappen. Wendet man die beschriebenen Verfahren nochmals auf die erhaltene Folge von Gleitkommazahlen an, dann erhält man die exakte Summe in einer Darstellung mit den beiden obigen Eigenschaften.

**Patentansprüche**

1. Verfahren zum Aufsummieren von

   aus Vorzeichen, Exponent und Mantisse bestehenden Summanden fester Wortlänge in Gleitkomma-Darstellung zu einer exakten Endsumme, in wenigstens einer Gleitkomma-Addierstufe mit zwei Operanden-Eingängen,

   mit Rechtsverschiebung der Mantisse des kleineren Operanden zur Erzielung gleicher Exponenten

   und mit Mantissenaddition,

   gekennzeichnet durch die folgenden Merkmale:

   Addition jeweils eines Summanden zu der aus der Addition der vorhergehenden Summanden entstandenen ersten Summe unter Erzeugung einer neuen ersten Summe und eines ersten Restes, der durch die Rechtsverschiebung von dem kleineren Operanden abgetrennt wird, beide in normalisierter Gleitkomma-Darstellung,

   Addition jeweils eines ersten Restes zu der aus der Addition der vorhergehenden ersten Reste entstandenen zweiten Summe unter Erzeugung einer neuen zweiten Summe und eines zweiten Restes, der durch die Rechtsverschiebung von dem kleineren Operanden abgetrennt wird, beide in normalisierter Gleitkomma-Darstellung,

   Addition jeweils eines zweiten bzw. dritten, usw. Restes zu der aus der Addition der vorhergehenden zweiten bzw. dritten, usw. Reste entstandenen dritten bzw. vierten, usw. Summe unter Erzeugung einer neuen dritten bzw. vierten, usw. Summe und eines dritten bzw. vierten, usw. Restes, der durch die Rechtsverschiebung von dem kleineren Operanden abgetrennt wird, beide jeweils in normalisierter Gleitkomma-Darstellung,

   Durchführung weiterer Additionen so lange, bis alle Summanden aufsummiert sind und bis alle Reste gleich null sind,

   wobei die exakte Endsumme sich aus sämtlichen zuletzt erzeugten neuen Summen zusammensetzt.

2. Verfahren nach Anspruch 1

   mit den folgenden Schritten:

   a) Zuführen eines Summanden an einen ersten Eingang einer ersten Addierstufe,
   Addieren des zugeführten Summanden zu der in dieser ersten Addierstufe im vorhergehenden Rechentakt erzeugten und an einen zweiten Eingang der ersten Addierstufe angelegten ersten Summe,

b) Weiterleiten eines durch die letzte Addition erzeugten Restes an einen ersten Eingang einer zweiten Addierstufe,

Addieren des zugeführten Restes zu der in dieser zweiten Addierstufe im vorhergehenden Rechentakt erzeugten und an einen zweiten Eingang der zweiten Addierstufe angelegten zweiten Summe,

c) Addieren weiterer Reste entsprechend dem Schritt b) in nachfolgenden dritten, vierten, usw. Addierstufen, so lange, bis alle Reste gleich null sind,

d) Wiederholung der Schritte a) bis c) so lange, bis alle Summanden zugeführt worden sind,

wobei in allen Addierstufen während eines Rechentaktes gleichzeitig eine Addition durchgeführt wird.

3. Verfahren nach Anspruch 1

mit den folgenden, zeitlich aufeinanderfolgenden Schritten:

a) Zuführen eines Summanden an einen ersten Eingang einer Addierstufe,

Addieren des zugeführten Summanden zu der an einen zweiten Eingang der Addierstufe angelegten ersten Summe,

Abspeichern des erzeugten Restes anstelle des bisherigen Restes und Abspeichern der erzeugten Summe anstelle der bisherigen ersten Summe,

b) Zuführen des abgespeicherten Restes an den ersten Eingang der Addierstufe,

Addieren des zugeführten Restes zu der an den zweiten Eingang der Addierstufe angelegten zweiten Summe,

Abspeichern des erzeugten Restes anstelle des bisherigen Restes und Abspeichern der erzeugten Summe anstelle der bisherigen zweiten Summe,

c) Wiederholung des Schrittes b) so lange, bis der Rest gleich null wird,

d) Wiederholung der Schritte a) bis c) so lange, bis alle Summanden zugeführt worden sind.

4. Verfahren nach Anspruch 3, worin zur Abspeicherung der Summen Speicherregister verwendet werden, deren Anzahl dadurch variabel gehalten wird, daß nur dann ein neues Register angefordert wird, wenn der Rest von Null verschieden ist und das letzte Register des Stapels schon verwendet wird.

5. Verfahren nach Anspruch 4, worin zur aufeinanderfolgenden Adressierung der Speicherregister eine nach jedem Rechenakt um 1 erhöhte Adresse verwendet wird und diese Adresse zurückgestellt wird, wenn der Rest gleich Null ist.

6. Schaltungsanordnung

mit einem ersten Eingang (B-Eingang) und einem zweiten Eingang (A-Eingang) zur Gleitkomma-Addition von zwei aus Vorzeichen, Exponent und Mantisse bestehenden Operanden (A, B)

mit einem Verschieber (8) und einem Mantissenaddierer (10) zum Ausrichten und Addieren der beiden Mantissen,

mit einer Post-Normalisierungseinrichtung (12, 14, 16) zum Eliminieren von führenden Nullen der Mantissen-Summe,

und mit einem Ausgang (S) für die Summe der beiden Operanden in Gleitkomma-Darstellung,

gekennzeichnet durch:

einen weiteren Verschieber (18) zur Abtrennung des beim Ausgleichen der Exponenten nach rechts verschobenen und nicht zur Mantisse des größeren Operanden (A'') addierten Restes der Mantisse des kleineren Operanden (B''),

eine Post-Normalisierungseinrichtung (20, 22, 24, 26) zur Normalisierung des abgetrennten Restes und zur Ausgabe eines "Rest Null" Signales,

und einen Ausgang (R) für den Rest mit der gleichen Gleitkomma-Darstellung am Ausgang (S, R) der Schaltungsanordnung wie an deren Eingang (A, B).

7. Schaltungsanordnung nach Anspruch 6, worin die Post-Normalisierungseinrichtung die folgenden Einheiten aufweist:

- einen Detektor (20) zur Feststellung der Anzahl führender Nullen des von weiterer Verschieber (18) abgetrennten Restes und zur Erzeugung eines dieser Anzahl entsprechenden Schiebebetrag-Signales,
- einen dritten vom Detektor gesteuerten Verschieber (22) zur Eliminierung der führenden Nullen,
- einen vom Detektor gesteuerten Addierer (26) zur Erzeugung des Exponenten des Restes, welcher Detektor ferner die Differenz der Exponenten der beiden Operanden (A, B), sowie den Exponenten des kleineren Operanden (B'') empfängt.

8. Schaltungsanordnung nach Anspruch 7 mit einer Torschaltung (24) zur Zuführung der niedersten Ziffer der vom Mantissen-Addierer (10) ausgegebenen Summe der Mantissen der beiden Operanden, wobei die Torschaltung von einem Übertragssignal des Mantissen-Addierers gesteuert wird, und ihr Ausgang jeweils mit einem Eingang des Detektors (20) und des dritten Verschiebers (22) verbunden ist.

9. Schaltungsanordnung nach Anspruch 7, worin der Detektor (20) einen Ausgang zur Erzeugung des Signales "Rest Null" aufweist.

10. Schaltungsanordnung mit einer Pipeline-artigen Vielzahl von Addierstufen (FPA1-FPA3) gemäß Anspruch 6, worin jeweils der Ausgang R für den Rest einer Stufe mit dem ersten Eingang (B) einer nächsten Stufe, und der Ausgang (S) für die Summe mit dem zweiten Eingang der selben Stufe verbunden ist, derartig, daß neu entstehende Reste jeweils an die nächste Stufe weitergegeben werden.

11. Schaltungsanordnung nach Anspruch 10 wobei zur Zwischenspeicherung jeweils ein Register (S1-S3) für die Summe und ein Register (R1-R3) für den Rest am Ausgang jeder Stufe (FPA1-FPA3) vorgesehen sind.

12. Schaltungsanordnung mit einer Addierstufe gemäß Anspruch 6 und den folgenden Merkmalen:

- Der Ausgang (R) für den Rest ist mit einem Rest-Register (32) und dessen Ausgang mit einem ersten Eingang eines Umschalters (36) verbunden,
- ein zweiter Eingang des Umschalters ist mit einem Eingang (SMD) zur Zuführung von nacheinander aufzusummierenden Summanden verbunden,
- der Ausgang des Umschalters ist mit dem ersten Eingang (B) der Addierstufe verbunden,
- der Eingang eines Registerstapels (34) zur Zwischenspeicherung von Summensignalen ist mit dem Ausgang (S) für die Summe und der Ausgang des Stapels mit dem zweiten Eingang (A) der Addierstufe verbunden,
- der Stapel wird von einer Addressiereinrichtung (38) mit aufeinanderfolgenden Adressen adressiert.

13. Schaltungsanordnung nach Anspruch 12, worin die Adressiereinrichtung (38) einen Rückstelleingang (RST) aufweist, der mit dem Ausgang "Rest Null" der Addierstufe verbunden ist.

**Claims**

1. Method for summing

    fixed word length summands consisting of sign, exponent and mantissa in floating point notation to obtain an exact end sum in at least one floating point adder stage with two operand inputs,

    comprising right shifting the mantissas of the smaller operand for obtaining identical exponents and

    mantissa addition,

characterized by the following features:

adding a summand to the first sum obtained by adding the preceding summands, generating a fresh first sum and a first remainder which is truncated from the smaller operand by right shifting, both in normalized floating point notation,

adding a first remainder to the second sum obtained by adding the preceding first remainders, generating a fresh second sum and a second remainder which is truncated from the smaller operand by right shifting, both in normalized floating point notation,

adding a second or third, etc., remainder to the sum obtained by adding the preceding second or third, etc., remainders, generating a fresh third or fourth, etc., sum and a third or fourth, etc., remainder which is truncated from the smaller operand by right shifting, both in normalized floating point notation,

carrying out further additions until all summands have been summed and all remainders are zero,

with the exact end sum being composed of the totality of the fresh sums to be generated last.

2. Method of claim 1,

comprising the steps of

    a) applying a summand to a first input of a first adder stage,
    adding said summand to the first sum generated in the first adder stage at the preceding computation clock and applied to a second input of the first adder stage,
    b) transferring a remainder resulting from said addition to a first input of a second adder stage,
    adding said remainder to the second sum generated in the second adder stage at the preceding computation clock and applied to a second input of the second adder stage,
    c) adding further remainders according to step b) in the third, fourth, etc., adder stages until all remainders are zero,
    d) repeating the steps a) to c) until all summands have been applied,
    while an addition is being performed in all adder stages during a computation clock.

3. Method of claim 1,

comprising the following chronologically successive steps:

    a) applying a summand to a first input of an adder stage,
    adding said summand to the first sum applied to a second input of the adder stage,
    storing the generated remainder in place of the previous remainder and storing the generated sum in place of the previous first sum,
    b) transferring the stored remainder to the first input of the adder stage,
    adding said remainder to the second sum applied to the second input of the adder stage,
    storing the generated remainder in place of the previous remainder and storing the generated sum in place of the previous second sum,
    c) repeating the step b) until the remainder is zero,
    d) repeating the steps a) to c) until all summands have been applied.

4. Method of claim 3, wherein for storing the sums, storage registers are used, the number of which is kept variable by requesting a further register only if the remainder is other than zero and the last register of the stack has already been used.

5. Method of claim 4, wherein for successive addressing of the storage registers, an address incremented by 1 after each computing clock is used, and said address is reset if the remainder is zero.

6. Circuit arrangement, comprising

a first input (B input) and a second input (A input) for the floating point addition of two operands (A, B) consisting of sign, exponent and mantissa,

a shift means (8) and a mantissa adder (10) for aligning and adding the two mantissas,

a post normalization means (12, 14, 16) for eliminating zeros from the mantissa sum, and

an output (S) for the sum of the two operands in floating point notation,

characterized by

another shift means (18) for truncating the remainder of the mantissa of the smaller operand (B") right-shifted for balancing the exponents and which has not been added to the mantissa of the larger operand (A"),

a post normalization means (20, 22, 24, 26) for normalizing the truncated remainder and for emitting a "remainder zero" signal, and

an output (R) for the remainder with the same floating point notation at the output (S, R) of the circuit arrangement as at its input (A, B).

7.  Circuit arrangement of claim 6, wherein the post normalization means comprises

   - a detector (20) for determining the number of leading zeros of the remainder truncated by said shift means (18) and for generating a shift value signal corresponding to the number of leading zeros,
   - a third shift means (22) controlled by the detector for eliminating leading zeros,
   - an adder (26) controlled by the detector for generating the exponent of the remainder, said detector also receiving the difference between the exponents of the two operands (A, B) as well as the exponent of the smaller operand (B").

8.  Circuit arrangement of claim 7, comprising a gate circuit (24) for applying the least-significant digit of the sum of mantissas of the two operands emitted by the mantissa adder (10), the gate circuit being controlled by a carry signal of the mantissa adder and its output being connected to an input of the detector (20) and the third shift means (22).

9.  Circuit arrangement of claim 7, wherein the detector (20) has an output for generating the "remainder zero" signal.

10. Circuit arrangement comprising a plurality of adder stages (FPA1-FPA3) arranged in pipeline form as claimed in claim 6, wherein the output R for the remainder of a stage is connected to the first input (B) of a subsequent stage, and the output (S) for the sum is connected to the second input of the same stage such that newly resulting remainders are in each case transmitted to the next stage.

11. Circuit arrangement of claim 10, wherein, for buffering, the output of each stage (FPA1-FPA3) is provided with one register (S1-S3) for the sum and one register (R1-R3) for the remainder.

12. Circuit arrangement with an adder stage of claim 6, comprising the following features:

   - the output (R) for the remainder is connected to a remainder register (32) and its output to a first input of a switch (36),
   - a second input of the switch is connected to an input (SMD) for applying summands to be successively summed,
   - the output of the switch is connected to the first input (B) of the adder stage,
   - the input of a register stack (34) for buffering sum signals is connected to the output (S) for the sum, and the output of the stack is connected to the second input (A) of the adder stage,
   - the stack is addressed by an address means (38) with successive addresses.

13. Circuit arrangement of claim 12, wherein said address means (38) comprises a reset input (RST) which is connected to the "remainder zero" output of the adder stage.

**Revendications**

1. Procédé pour additionner
   des nombres à additionner possédant une longueur de mot fixe, constitués par un signe, un exposant et une mantisse et représentés selon la représentation à virgule flottante, pour former une somme finale exacte, dans au moins un étage additionneur à virgule flottante comportant deux entrées d'opérandes,
   avec un décalage vers la droite de la mantisse du plus petit opérande pour l'obtention d'exposants identiques, et avec une addition des mantisses,
   caractérisé par les caractéristiques suivantes :
   l'addition respectivement d'un nombre à additionner à la première somme, formée à partir de l'addition des nombres additionnés précédents, avec formation d'une nouvelle première somme et d'un premier reste, qui est séparé du plus petit opérande au moyen du décalage vers la droite, cette somme et ce reste étant représentés selon une représentation normalisée à virgule flottante,
   l'addition respectivement d'un premier reste à la seconde somme, formée à partir de l'addition des premiers restes précédents, avec formation d'une nouvelle seconde somme et d'un second reste, qui est séparé du plus petit opérande par le décalage vers la droite, cette somme et ce reste étant représentés selon la représentation normalisée à virgule flottante,
   l'addition respectivement d'un second ou d'un troisième, etc. reste à la troisième ou quatrième, etc. somme, obtenue par addition des seconds ou troisièmes restes précédents, avec formation d'une nouvelle troisième ou quatrième, etc. somme et d'un troisième ou quatrième, etc. reste, qui est séparé du plus petit opérande par le décalage vers la droite, cette somme et ce reste étant représentés respectivement selon une représentation normalisée à virgule flottante,
   l'exécution d'autres additions jusqu'à ce que tous les nombres à additionner aient été additionnés et que tous les restes soient nuls,
   la somme finale exacte se composant de toutes les nouvelles sommes produites en dernier.

2. Procédé selon la revendication 1, comprenant les étapes suivantes :
   a) envoi d'un nombre à additionner à une première entrée d'un premier étage additionneur,
   addition du nombre à additionner envoyé, à la première somme produite lors du pas de calcul précédent dans ce premier étage additionneur et envoyée à une seconde entrée du premier étage additionneur,
   b) transfert d'un reste produit par la dernière addition, à la première entrée d'un second étage additionneur,
   addition du reste envoyé, à la seconde somme produite lors du pas de calcul précédent dans ce second étage additionneur et envoyée à une seconde entrée du second étage additionneur,
   c) addition d'autres restes conformément au pas b) dans des troisième, quatrième, etc. étages additionneurs suivants, jusqu'à ce que tous les restes soient nuls,
   d) répétition des pas a) à c) jusqu'à ce que tous les nombres à additionner aient été envoyés,
   une addition étant exécutée simultanément dans tous les étages additionneurs pendant un pas de calcul.

3. Procédé selon la revendication 1, comprenant les pas suivants, qui se succèdent dans le temps :
   a) envoi d'un nombre à additionner à une première entrée d'un étage additionneur,
   addition du nombre à additionner envoyé, à la première somme envoyée à une seconde entrée de l'étage additionneur,
   mémorisation du reste obtenu à la place du reste précédent et mémorisation de la somme produite à la place de la première somme précédente,
   b) envoi du reste mémorisé à la première entrée de l'étage additionneur,
   addition du reste envoyé, à la seconde somme envoyée à la seconde entrée de l'étage additionneur,
   mémorisation du premier reste à la place du reste précédent et mémorisation de la somme produite à la place de la seconde somme précédente,
   c) répétition du pas b) jusqu'à ce que le reste s'annule,
   d) répétition des pas a) à c) jusqu'à ce que tous les nombres à additionner aient été envoyés.

4. procédé selon la revendication 3, selon lequel pour la mémorisation des sommes, on utilise des registres de mémoire, dont le nombre est maintenu variable par le fait qu'un nouveau registre est requis uniquement lorsque le reste est différent de zéro et que le dernier registre de la pile est déjà utilisé.

5. Procédé selon la revendication 4, selon lequel pour l'adressage successif des registres de mémoire, on utilise une adresse accrue de 1 après chaque pas de calcul, et qu'on ramène cette adresse à l'état initial lorsque le reste est nul.

6. Montage
comportant une première entrée (entrée B) et une seconde entrée (entrée A) pour l'addition à virgule flottante de deux opérandes (A,B) constitués par un signe, un exposant et une mantisse,
un dispositif de décalage (8) et un additionneur de mantisses (10) servant à aligner et à additionner les deux mantisses,
un dispositif de post-normalisation (12,14,16) servant à éliminer des zéros d'en-tête de la somme des mantisses, et
une sortie (S) pour la somme des deux opérandes dans la représentation à virgule flottante,
caractérisé par :
un autre dispositif de décalage (18) servant à séparer le reste de la mantisse du plus petit opérande (B"), décalé vers la droite lors de l'alignement des exposants et non ajouté à la mantisse du plus grand opérande (A"),
un dispositif de post-normalisation (20,22,24,26) servant à normaliser le reste séparé et à délivrer un signal "reste nul", et
une sortie (R) pour le reste représenté à la sortie (S,R) du montage selon la même représentation à virgule flottante qu'à son entrée (A,B).

7. Montage selon la revendication 6, dans lequel le dispositif de post-normalisation contient les unités suivantes:
   - un détecteur (20) servant à déterminer le nombre de zéros d'en-tête du reste séparé de l'autre dispositif de décalage (18) et produire un signal de valeur de décalage correspondant à ce nombre,
   - un troisième dispositif de décalage (22) commandé par le détecteur et servant à éliminer les zéros d'en-tête,
   - un additionneur (26) commandé par le détecteur et servant à produire l'exposant du reste, ce détecteur recevant en outre la différence entre les exposants des deux opérandes (A,B) ainsi que l'exposant du plus petit opérande (B").

8. Montage selon la revendication 7 comportant un circuit de porte (24) pour envoyer les chiffres de poids les plus faibles de la somme, délivrée par l'additionneur de mantisses (10), des mantisses de deux opérandes, le circuit de porte étant commandé par un signal de report de l'additionneur des mantisses, tandis que sa sortie est raccordée respectivement à une entrée du détecteur (20) et du troisième dispositif de décalage (22).

9. Montage selon la revendication 7, dans lequel le détecteur (20) possède une sortie servant à délivrer le signal "reste nul".

10. Montage comportant une multiplicité d'étages additionneurs (FPA1-FPA3), disposés avec une disposition pipeline, selon la revendication 6, dans lequel respectivement la sortie R pour le reste d'un étage est raccordée à la première entrée (B) d'un étage immédiatement suivant, et la sortie (S) pour la somme est raccordée à la seconde entrée du même étage, de telle sorte que de nouveaux restes apparaissants sont retransmis respectivement à l'étage suivant.

11. Montage selon la revendication 10, dans lequel pour la mémorisation intermédiaire, il est prévu respectivement un registre (S1-S3) pour la somme et un registre (R1-R3) pour le reste à la sortie de chaque étage (FPA1-FPA3).

12. Montage comprenant un étage additionneur selon la revendication 6 et possédant les caractéristiques suivantes :

- la sortie (R) pour le reste est raccordée à un registre de restes (32), dont la sortie est raccordée à une première entrée d'un commutateur (36),
- une seconde entrée du commutateur est raccordée à une entrée (SMD) servant à l'envoi de nombres à additionner, qui doivent être additionnés successivement,
- la sortie du commutateur est raccordée à la première entrée (B) de l'étage additionneur,
- l'entrée d'une pile de registres (34) servant à mémoriser temporairement des signaux sommes est raccordée à la sortie (S) pour la somme, et la sortie de la pile est raccordée à la seconde entrée (A) de l'étage additionneur,
- la pile est adressée par un dispositif d'adressage (38) avec des adresses successives.

13. Montage selon la revendication 12, dans lequel le dispositif d'adressage (38) possède une entrée (RST) de remise à l'état initial, qui est raccordée à la sortie "reste nul" de l'étage additionneur.

16

| S | CH | MANTISSE |
|---|----|----------|

0 1     7                                           63

## FIG.1

STUFE 1             STUFE 2             STUFE 3

| | | |
|---|---|---|
| A   S | S1 | |
| FPA 1 | | |
| B   R | R1 | |

EINGANG

A   S   S2
FPA 2
B   R   R2

A   S   S3
FPA 3
B   R   R3

## FIG.6

EP 0 265 555 B1

FIG. 2

FIG. 2A

EP 0 265 555 B1

FIG.2 B

EP 0 265 555 B1

Beispiel 1

| Signal Name | Wert (hexadezimal) |
|---|---|
| Summand A | B4 80 00 00 00 00 00 02 |
| Summand B | 40 A0 00 00 00 00 00 0F |
| | |
| Char A | 34 |
| Char B | 40 |
| Char Differenz | C |
| Vorzeichen | 1 |
| | |
| Summand A" | wie B |
| Vorzeichen | 0 |
| Char | 40 |
| Mantisse | A0 00 00 00 00 00 0F |
| | |
| Summand B" | wie A |
| Vorzeichen | 1 |
| Char | 34 |
| Mantisse | 80 00 00 00 00 00 02 |
| | |
| Char Differenz | C |
| Ausgang VS 8 | 00 00 00 00 00 00 80 |
| Ausgang VS 18 | 00 00 00 00 00 02 00 |
| | |
| Summe, Addierer 10 | |
| Vorzeichen | 0 |
| Übertrag | 0 |
| Mantisse | 9F FF FF FF FF FF 8F |
| | |
| Führende Nullen, LZD12 | |
| Schiebe-Betrag Summe | 0 |
| Summe Null | 0 |
| Ausgang VS 14 | 9F FF FF FF FF FF 8F |
| | |
| Summenziffer (60-63) | 0 |
| | |
| Führende Nullen, LZD20 | |
| Schiebe-Betrag Rest | -B |
| Rest Null | 0 |
| Ausgang VS 22 | 20 00 00 00 00 00 00 |
| | |
| Char Addierer Summe 16 | |
| Summe Überlauf | 0 |
| Summe Unterlauf | 0 |
| Char Summe | 40 |
| Vorzeichen Summe | 0 |
| Summe Null | 0 |
| | |
| Char Addierer Rest 26 | |
| Rest Unterlauf | 0 |
| Char Rest | 27 |
| Vorzeichen Rest | 1 |
| Rest Null | 0 |
| | |
| Summe S | 40 9F FF FF FF FF 8F |
| Rest R | A7 20 00 00 00 00 00 |

# FIG. 3

Beispiel 2

| Signal Name | Wert (hexadezimal) |
|---|---|
| Summand A | C0 FF FF FF FF FF FF F8 |
| Summand B | B3 A1 23 45 67 89 AB CD |
| | |
| Char A | 40 |
| Char B | 33 |
| Char Differenz | D |
| Vorzeichen | 0 |
| | |
| Summand A" | wie A |
| Vorzeichen | 1 |
| Char | 40 |
| Mantisse | FF FF FF FF FF FF F8 |
| | |
| Summand B" | wie B |
| Vorzeichen | 1 |
| Char | 33 |
| Mantisse | A1 23 45 67 89 AB CD |
| | |
| Char Differenz | D |
| Ausgang VS 8 | 00 00 00 00 00 00 0A |
| Ausgang VS 18 | 12 34 56 78 9A BC D0 |
| | |
| Summe, Addierer 10 | |
| Vorzeichen | 1 |
| Übergang | 1 |
| Mantisse | 00 00 00 00 00 00 02 |
| | |
| Führende Nullen, LZD12 | |
| Schiebe-Betrag Summe | 1 |
| Summe Null | 0 |
| Ausgang VS 14 | 10 00 00 00 00 00 00 |
| | |
| Summenziffer (60-63) | 2 |
| | |
| Führende Nullen, LZD20 | |
| Schiebe-Betrag Rest | 1 |
| Rest Null | 0 |
| Ausgang VS 22 | 21 23 45 67 89 AB CD |
| | |
| Char Addierer Summe 16 | |
| Summe Überlauf | 0 |
| Summe Unterlauf | 0 |
| Char Summe | 41 |
| Vorzeichen Summe | 1 |
| Summe Null | 0 |
| | |
| Char Addierer Rest 26 | |
| Rest Unterlauf | 0 |
| Char Rest | 33 |
| Vorzeichen Rest | 1 |
| Rest Null | 0 |
| | |
| Summe S | C1 10 00 00 00 00 00 00 |
| Rest R | B3 21 23 45 67 89 AB CD |

FIG. 4

Beispiel 3

| Signal Name | Wert (hexadezimal) |
|---|---|
| Summand A | 40 80 00 00 00 00 00 02 |
| Summand B | B0 A0 00 00 00 00 00 0F |
| | |
| Char A | 40 |
| Char B | 30 |
| Char Differenz | E |
| Vorzeichen | 0 |
| | |
| Summand A" | wie A |
| Vorzeichen | 0 |
| Char | 40 |
| Mantisse | 80 00 00 00 00 00 02 |
| | |
| Summand B" | wie B |
| Vorzeichen | 1 |
| Char | 30 |
| Mantisse | A0 00 00 00 00 00 0F |
| | |
| Char Differenz | E |
| Ausgang VS 8 | 00 00 00 00 00 00 00 |
| Ausgang VS 18 | A0 00 00 00 00 00 0F |
| | |
| Summe, Addierer 10 | |
| Vorzeichen | 0 |
| Übertrag | 0 |
| Mantisse | 80 00 00 00 00 00 02 |
| | |
| Führende Nullen, LZD12 | |
| Schiebe-Betrag Summe | 0 |
| Summe Null | 0 |
| Ausgang VS 14 | 80 00 00 00 00 00 02 |
| | |
| Summenziffer (60-63) | 0 |
| | |
| Führende Nullen, LZD20 | |
| Schiebe-Betrag Rest | 0 |
| Rest Null | 0 |
| Ausgang VS 22 | A0 00 00 00 00 00 0F |
| | |
| Char Addierer Summe 16 | |
| Summe Überlauf | 0 |
| Summe Unterlauf | 0 |
| Char Summe | 40 |
| Vorzeichen Summe | 0 |
| Summe Null | 0 |
| | |
| Char Addierer Rest 26 | |
| Rest Unterlauf | 0 |
| Char Rest | 30 |
| Vorzeichen Rest | 1 |
| Rest Null | 0 |
| | |
| Summe S | 40 80 00 00 00 00 02 |
| Rest R | B0 A0 00 00 00 00 0F |

# FIG. 5

| Takt | 0 | 1 | 2 | 3 | 4 | 5 | 6 | 7 |
|---|---|---|---|---|---|---|---|---|
| Eingang | +1,234E12 | +2,345E9 | +3,456E6 | +4,567E3 | 0 | | | |
| **Stufe 1** | | | | | | | | |
| Opd B | | 1,234E12 | 2,345E9 | 3,456E6 | 4,567E3 | 0 | 0 | 0 |
| Opd A | | 0 | 1,234E12 | 1,236E12 | 1,236E12 | 1,236E12 | 1,236E12 | 1,236E12 |
| S1 | | 1,234E12 | 1,236E12 | 1,236E12 | 1,236E12 | 1,236E12 | 1,236E12 | 1,236E12 |
| R1 | | 0 | 3,450E8 | 3,456E6 | 4,567E3 | 0 | 0 | 0 |
| **Stufe 2** | | | | | | | | |
| Opd B | | | | 3,450E8 | 3,456E6 | 4,567E3 | 0 | 0 |
| Opd A | | | | 0 | 3,450E8 | 3,484E8 | 3,484E8 | 3,484E8 |
| S2 | | | | 3,450E8 | 3,484E8 | 3,484E8 | 3,484E8 | 3,484E8 |
| R2 | | | | 0 | 5,600E4 | 4,567E3 | 0 | 0 |
| **Stufe 3** | | | | | | | | |
| Opd B | | | | | | 5,600E4 | 4,567E3 | 0 |
| Opd A | | | | | | 0 | 5,600E4 | 6,056E4 |
| S3 | | | | | | 5,600E4 | 6,056E4 | 6,056E4 |
| R3 | | | | | | 0 | 7,000E0 | 0 |
| **Stufe 4** | | | | | | | | |
| Opd B | | | | | | | 0 | 7,000E0 |
| Opd A | | | | | | | | 0 |
| S4 | | | | | | | | 7,000E0 |
| R4 | | | | | | | | 0 |

FIG. 7

EP 0 265 555 B1

FIG. 8

| Haupt Takt | Unter Takt | SMR Adr. | Opd. | B | A | Summe S | Rest R | SMR Adr. | Inhalt | Rechen-schritt |
|---|---|---|---|---|---|---|---|---|---|---|
| 1 | | 0 | 1,234E12 | 1,234E12 | 0 | 1,234E12 | 0 | | | 1 |
| | | | | | | | | 0 | 1,234E12 | |
| | | | | | | | | 1 | 0 | |
| 2 | | 0 | 2,345E9 | 2,345E9 | 1,234E12 | 1,236E12 | 3,450E8 | | | 2 |
| | | | | | | | | 0 | 1,236E12 | |
| | | | | | | | | 1 | 0 | |
| | 1 | 1 | – | 3,450E8 | 0 | 3,450E8 | 0 | | | 3 |
| | | | | | | | | 0 | 1,236E12 | |
| | | | | | | | | 1 | 3,450E8 | |
| | | | | | | | | 2 | 0 | |
| 3 | | 0 | 3,456E6 | 3,456E6 | 1,236E12 | 1,236E12 | 3,456E6 | | | 4 |
| | | | | | | | | 0 | 1,236E12 | |
| | | | | | | | | 1 | 3,450E8 | |
| | | | | | | | | 2 | 0 | |
| | 2 | 1 | – | 3,456E6 | 3,450E8 | 3,484E8 | 5,600E4 | | | 5 |
| | | | | | | | | 0 | 1,236E12 | |
| | | | | | | | | 1 | 3,484E8 | |
| | | | | | | | | 2 | 0 | |
| | 3 | 2 | – | 5,600E4 | 0 | 5,600E4 | 0 | | | 6 |
| | | | | | | | | 0 | 1,236E12 | |
| | | | | | | | | 1 | 3,484E8 | |
| | | | | | | | | 2 | 5,600E4 | |
| | | | | | | | | 3 | 0 | |

## FIG. 9A

EP 0 265 555 B1

| Haupt Takt | Unter Takt | SMR Adr. | Opd. | B | A | Summe S | Rest R | SMR Adr. | Inhalt | Rechen- schritt |
|---|---|---|---|---|---|---|---|---|---|---|
| 4 | | 0 | 4,567E3 | 4,567E3 | 1,236E12 | 1,236E12 | 4,567E3 | | | 7 |
| | | | | | | | | 0 | 1,236E12 | |
| | | | | | | | | 1 | 3,484E8 | |
| | | | | | | | | 2 | 5,600E4 | |
| | | | | | | | | 3 | 0 | |
| | 4 | 1 | — | 4,567E3 | 3,484E8 | 3,484E8 | 4,567E3 | | | 8 |
| | | | | | | | | 0 | 1,236E12 | |
| | | | | | | | | 1 | 3,484E8 | |
| | | | | | | | | 2 | 5,600E4 | |
| | | | | | | | | 3 | 0 | |
| | 5 | 2 | — | 4,567E3 | 5,600E4 | 6,056E4 | 7,000E0 | | | 9 |
| | | | | | | | | 0 | 1,236E12 | |
| | | | | | | | | 1 | 3,484E8 | |
| | | | | | | | | 2 | 6,056E4 | |
| | | | | | | | | 3 | 0 | |
| | 6 | 3 | — | 7,000E0 | 0 | 7,000E0 | 0 | | | 10 |
| | | | | | | | | 0 | 1,236E12 ⎫ | |
| | | | | | | | | 1 | 3,484E8 ⎪ | |
| | | | | | | | | 2 | 6,056E4 ⎬ Summe | |
| | | | | | | | | 3 | 7,000E0 ⎪ | |
| | | | | | | | | 4 | 0 ⎭ | |

## FIG. 9B

EP 0 265 555 B1